# EUROPÄISCHE PATENTANMELDUNG

(11) **EP 1 717 497 A1**
(43) Veröffentlichungstag der Anmeldung: **02.11.2006**
(21) Anmeldenummer: 06001270.5
(22) Anmeldetag: 21.01.2006
(51) Int. Cl.: F16K 1/44, F16K 31/06

(54) **Gasarmatur**

(30) Priorität: 28.04.2005 DE 102005020206
(71) Anmelder: G. Kromschröder Aktiengesellschaft, D-49074 Osnabrück (DE)
(72) Erfinder: Brochhaus, Detlef, 49074 Osnabrück (DE); Bungard, Peter, 49324 Melle (DE)
(74) Vertreter: Schmidt, Frank-Michael

(57) **Zusammenfassung**

Offenbart wird eine Gasarmatur mit
- einem Gehäuse (1), das einen aus einem einlaßseitigen Zweig (2) und einem auslaßseitigen Zweig (3) bestehenden Gasweg sowie mindestens eine von außen zugängliche, den Gasweg kreuzende Einstecköffnung (4) aufweist, wobei das Gehäuse (1) zwei in axialem Abstand um die Einstecköffnung (4) umlaufende Gehäuse-Dichtflächen (6) bildet und wobei der Raum der Einstecköffnung (4) zwischen den beiden Gehäuse-Dichtflächen (6) bis auf die Mündung eines der beiden Zweige (2, 3) des Gaswegs seitlich abgeschlossen ist, während der andere Zweig jenseits dieses Raumes mit der Einstecköffnung (4) in Verbindung steht, und
- einer in die Einstecköffnung (4) eingesteckten Patrone (5), die zwei zu den Gehäuse-Dichtflächen (6) komplementäre Patronen-Dichtflächen (8) und einen stirnseitig an mindestens einem Ende geschlossenen Hohlraum aufweist, wobei der Hohlraum zwischen den beiden Patronen-Dichtflächen (8) sowie jenseits mindestens einer der Patronen-Dichtflächen (8) seitlich geöffnet ist und wobei in dem Hohlraum mindestens ein axial bewegbarer Ventilkörper (9, 11) mit einem zugehörigen Ventilsitz (10, 12) zusammenarbeitet, der einer der Patronen-Dichtflächen (8) zugeordnet ist.

## Beschreibung

Die Erfindung betrifft eine Gasarmatur.

Dabei liegt der Erfindung die Aufgabe zugrunde, eine in ihrer Funktion variable, herstellungstechnisch günstige Gasarmatur zu schaffen.

Hierzu ist die erfindungsgemäße Gasarmatur versehen mit
- einem Gehäuse, das einen aus einem einlaßseitigen Zweig und einem auslaßseitigen Zweig bestehenden Gasweg sowie mindestens eine von außen zugängliche, den Gasweg kreuzende Einstecköffnung aufweist, wobei das Gehäuse zwei in axialem Abstand um die Einstecköffnung umlaufende Gehäuse-Dichtflächen bildet und wobei der Raum der Einstecköffnung zwischen den beiden Gehäuse-Dichtflächen bis auf die Mündung eines der beiden Zweige des Gaswegs seitlich abgeschlossen ist, während der andere Zweig jenseits dieses Raums mit der Einstecköffnung in Verbindung steht, und
- einer in die Einstecköffnung eingesteckten Patrone, die zwei zu den Gehäuse-Dichtflächen komplementäre Patronen-Dichtflächen und einen stirnseitig an mindestens einem Ende geschlossenen Hohlraum aufweist, wobei der Hohlraum zwischen den beiden Patronen-Dichtflächen sowie jenseits mindestens einer der Patronen-Dichtflächen seitlich geöffnet ist und wobei in dem Hohlraum mindestens ein axial bewegbarer Ventilkörper mit einem zugehörigen Ventilsitz zusammenarbeitet, der vorzugsweise einer der Patronen-Dichtflächen zugeordnet ist.

Das Gas tritt eingangsseitig in das Gehäuse ein und strömt in den Hohlraum der Patrone, und zwar entweder in den Raum zwischen den beiden Patronen-Dichtflächen oder in den Raum jenseits mindestens einer der beiden Patronen-Dichtflächen. Sodann kann das Gas, sofern der Ventilkörper von seinem Ventilsitz abgehoben ist, das Gehäuse auslaßseitig verlassen. Der vom Gehäuse gebildete Gasweg kann also entweder in der einen oder in der anderen Richtung durchströmt werden.

Der wesentliche Vorteil der Erfindung besteht darin, daß die dem Gehäuse zugeordnete Sicherheitsfunktion von der Ventilfunktion abgekoppelt ist, wobei letztere der Patrone zugeordnet wird.

Hieraus resultiert die Möglichkeit, ein und dasselbe Gehäuse multifunktional zu nutzen, und zwar durch Verwendung unterschiedlicher Patronen, die als Absperrventil, Stellventil, Regler oder dergleichen ausgebildet sind.

Auch bedarf das Gehäuse lediglich einer grobmechanischen Bearbeitung, während sich die feinmechanische Bearbeitung auf die Patrone beschränkt. Dies gilt insbesondere dann, wenn, wie es ferner vorgeschlagen wird, zwischen den komplementären Dichtflächen je mindestens ein Dichtring angeordnet ist, wobei die Dichtflächen vorzugsweise parallel zueinander angeordnet sind.

Die Arbeitsschwerpunkte beim Herstellungsprozeß können also aufgeteilt werden, wobei an die Fertigungsgenauigkeit des Gehäuses geringere Anforderungen zu stellen sind als an die der Patrone.

Das Gehäuse der Gasarmatur wird vorzugsweise aus Metall gegossen, wobei man eine potentielle Porösität des Gusses in Kauf nehmen kann, da die Dichtfunktion vom Gehäuse abgekoppelt und der Patrone zugeordnet ist.

Zu erwähnen ist ferner, daß die Gerätewartung und gegebenenfalls -erneuerung an Anlage vor Ort erleichtert wird und daß die Versand- und Transportkosten reduziert werden können.

Der Winkel, unter dem die Einstecköffnung den Gasweg kreuzt, ist grundsätzlich nicht kritisch. Allerdings sprechen herstellungstechnische Gründe dafür, einen Winkel von vorzugsweise 90° zu wählen.

Ein gesondertes, in das Gehäuse eingefügtes Bauteil kann dazu dienen, den Raum der Einstecköffnung zwischen den beiden Gehäuse-Dichtflächen bis auf die Mündung des einen der beiden Zweige des Gasweges abzuschließen. Vorteilhafter hingegen ist es, diesen Abschluß durch eine Gehäuse-Innenwand zu erzielen, und zwar insbesondere dann, wenn es sich um ein gegossenes Gehäuse handelt.

Der Ventilkörper kann jenseits des Raumes zwischen den beiden Patronen-Dichflächen bewegbar sein. Vorteilhafterweise allerdings ist er innerhalb dieses Raumes bewegbar.

Ein weiteres vorteilhaftes Merkmal besteht darin, daß der Ventilkörper von einer Schließfeder belastet und mit einem elektromagnetischen Antrieb verbunden ist, der in die Patrone integriert ist. Die Patrone stellt also eine gesonderte Baugruppe dar, die in Alleinstellung die gesamte Ventilfunktion erfüllt und lediglich in das Gehäuse eingesteckt und mit diesem verbunden werden muß.

In wesentlicher Weiterbildung der Erfindung wird vorgeschlagen, daß der Hohlraum der Patrone jenseits beider Patronen-Dichtflächen seitlich geöffnet ist und daß mit dem ersten Ventilkörper ein zweiter Ventilkörper verbunden ist, der mit einem zugehörigen, vorzugsweise der anderen Patronen-Dichtfläche zugeordneten Ventilsitz zusammenarbeitet. Es handelt sich also um ein Doppelsitz-Ventil, dessen Vorteil in seiner geringen Baugröße liegt. Einer der Ventilkörper arbeitet innerhalb des Raumes zwischen den beiden Patronen-Dichtflächen, während der andere Ventilkörper außerhalb dieses Raumes bewegt wird. Der Hohlraum der Patrone ist jenseits des Raumes zwischen den beiden Patronen-Dichtflächen beidseitig geöffnet.

Nach einem weiteren vorteilhaften Merkmal weist das Gehäuse zwei Einstecköffnungen mit zugehörigen Patronen auf, die in Reihe im Gasweg angeordnet sind.

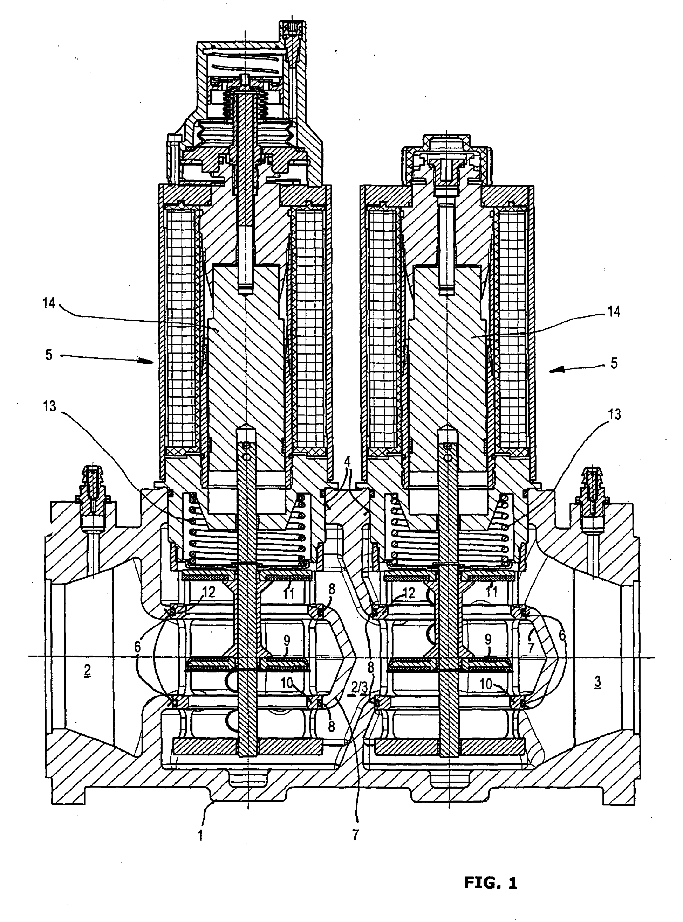

Die Erfindung wird im folgenden anhand eines bevorzugten Ausführungsbeispiels im Zusammenhang mit der beiliegenden Zeichnung näher erläutert. Die Zeichnung zeigt einen Axialschnitt durch eine erfindungsgemäße Gasarmatur.

Die dargestellte Gasarmatur weist ein gegossenes Gehäuse 1 auf, das einen durch das Gehäuse hindurchführenden Gasweg bildet. Dieser besteht aus einem einlaßseitigen Zweig 2 und einem auslaßseitigen Zweig 3. Die Gasarmatur wird also im vorliegenden Falle von links nach recht durchströmt. Allerdings kann die Strömungsrichtung ohne weiteres auch umgekehrt werden.

Ferner weist das Gehäuse zwei Einstecköffnungen 4 auf, die von oben her zugänglich sind und den Gasweg rechtwinklig kreuzen. Sie dienen zur Aufnahme je einer Patrone 5, die die eigentliche Ventilfunktion übernehmen. Das Gehäuse 1 bildet an jeder Einstecköffnung 4 zwei in axialem Abstand und parallel zueinanderliegende Gehäuse-Dichtflächen 6, die um die zugehörige Einstecköffnung 4 umlaufen. Der Raum jeder Einstecköffnung 4 zwischen den Gehäuse-Dichtflächen 6 ist von einer Gehäuse-Innenwand 7 seitlich abgeschlossen, wobei lediglich die Mündung des zugehörigen Zweiges des Gasweges offen bleibt. Der andere Zweig des Gasweges steht beidseitig jenseits des zwischen den beiden Gehäuse-Dichtflächen 6 liegenden Raumes mit der zugehörigen Einstecköffnung 4 in Verbindung.

Jede Patrone 5 weist zwei zu den Gehäuse-Dichtflächen 6 komplementäre Patronen-Dichtflächen 8 auf, wobei zwischen den jeweils komplementären Dichtflächen ein Dichtring eingelegt ist. Der Hohlraum jeder Patrone 5 ist oben und unten geschlossen, seitlich jedoch offen, und zwar sowohl im Raum zwischen den Patronen-Dichtflächen 8 als auch beidseitig jenseits dieses Raumes. Dabei bildet er in vorteilhafter Weise eine käfigartige Struktur. In dem Raum zwischen den Patronen-Dichtflächen 8 ist ein erster Ventilkörper 9 bewegbar, der mit einem Ventilsitz 10 zusammenarbeitet, welcher der unteren Patronen-Dichtfläche 8 zugeordnet ist. Mit dem ersten Ventilkörper 9 ist ein zweiter Ventilkörper 11 verbunden, der sich oberhalb des Raumes zwischen den Patronen-Dichtflächen 8 bewegt und mit einem Ventilsitz 12 zusammenarbeitet, welcher der oberen Patronen-Dichtfläche 8 zugeordnet ist. Jede Patrone 5 bildet also ein in seiner Baugröße minimiertes Doppelsitzventil. Die beiden Ventilkörper 9 und 11 werden gemeinsam von einer Schließfeder 13 belastet und sind je an einen elektromagnetischen Antrieb 14 angeschlossen, der in die zugehörige Patrone 5 integriert ist.

Das Gas strömt in die linksseitige Patrone 5 ein und gelangt in den Raum zwischen den Patronen-Dichtflächen 8. Bei geöffneten Ventilkörpern 9 und 11 durchströmt es die Ventilsitze 10 und 12 und gelangt in die rechtsseitige Patrone 5, und zwar dort wiederum in den Raum zwischen den Patronen-Dichtflächen 8. Nach Passieren der Ventilsitze 10 und 12 verläßt es die Armatur über den auslaßseitigen Zweig 3 des Gasweges.

Im Rahmen der Erfindung sind gegenüber der dargestellten Ausführungsform durchaus Abwandlungen möglich. So kann das Gehäuse lediglich eine einzige Einstecköffnung aufweisen, die den Gasweg auch schrägwinklig kreuzen kann. Ferner kann jede Patrone mit einem einzigen Ventilkörper und einem einzigen zugehörigen Ventilsitz arbeiten. Dabei genügt es, die Patrone lediglich jenseits eines der Patronen-Dichtflächen seitlich zu öffnen. Der einzige Ventilkörper kann innerhalb des Raumes zwischen den Patronen-Dichtflächen arbeiten oder zu einer Seite jenseits dieses Raumes. Die dem einzigen Ventilkörper nicht zugeordnete Patronen-Dichtfläche bildet dann gleichzeitig den axialen Verschluß des Hohlraums der Patrone. Wird beispielsweise nur mit dem Ventilkörper 9 gearbeitet, kann der Hohlraum der Patrone 5 nach unten hin offen sein. Die Ventile müssen nicht unbedingt den Dichtflächen zugeordnet sein. Auch kann von der käfigartigen Struktur der Patrone abgewichen werden.

## Patentansprüche

1. Gasarmatur mit
- einem Gehäuse (1), das einen aus einem einlaßseitigen Zweig (2) und einem auslaßseitigen Zweig (3) bestehenden Gasweg sowie mindestens eine von außen zugängliche, den Gasweg kreuzende Einstecköffnung (4) aufweist, wobei das Gehäuse (1) zwei in axialem Abstand um die Einstecköffnung (4) umlaufende Gehäuse-Dichtflächen (6) bildet und wobei der Raum der Einstecköffnung (4) zwischen den beiden Gehäuse-Dichtflächen (6) bis auf die Mündung eines der beiden Zweige (2, 3) des Gaswegs seitlich abgeschlossen ist, während der andere Zweig jenseits dieses Raumes mit der Einstecköffnung (4) in Verbindung steht, und
- einer in die Einstecköffnung (4) eingesteckten Patrone (5), die zwei zu den Gehäuse-Dichtflächen (6) komplementäre Patronen-Dichtflächen (8) und einen stirnseitig an mindestens einem Ende geschlossenen Hohlraum aufweist, wobei der Hohlraum zwischen den beiden Patronen-Dichtflächen (8) sowie jenseits mindestens einer der Patronen-Dichtflächen (8) seitlich geöffnet ist und wobei in dem Hohlraum mindestens ein axial bewegbarer Ventilkörper (9, 11) mit einem zugehörigen Ventilsitz (10, 12) zusammenarbeitet, der vorzugsweise einer der Patronen-Dichtflächen (8) zugeordnet ist.

2. Gasarmatur nach Anspruch 1, **dadurch gekennzeichnet, daß** zwischen den komplementären Dichtflächen (6, 8) je mindestens ein Dichtring angeordnet ist.

3. Gasarmatur nach Anspruch 1 oder 2, **dadurch gekennzeichnet, daß** die Dichtflächen (6; 8) parallel zueinander angeordnet sind.

4. Gasarmatur nach einem der Ansprüche 1 bis 3, **dadurch gekennzeichnet, daß** die Einstecköffnung (4) den Gasweg kreuzt.

5. Gasarmatur nach einem der Ansprüche 1 bis 4, **gekennzeichnet durch** eine Gehäuse-Innenwand (7), die den Raum der Einstecköffnung (4) zwischen den beiden Gehäuse-Dichtflächen (6) bis auf die Mündung des einen der beiden Zweige (2, 3) des Gasweges abschließt.

6. Gasarmatur nach einem der Ansprüche 1 bis 5, **dadurch gekennzeichnet, daß** der Ventilkörper (9) in dem Raum zwischen den beiden Patronen-Dichtflächen (8) bewegbar ist.

7. Gasarmatur nach einem der Ansprüche 1 bis 6, **dadurch gekennzeichnet, daß** der Ventilkörper (9, 11) von einer Schließfeder (13) belastet und mit einem elektromagnetischen Antrieb (14) verbunden ist, der in die Patrone (5) integriert ist.

8. Gasarmatur nach einem der Ansprüche 1 bis 7, **dadurch gekennzeichnet, daß** der Hohlraum der Patrone (5) jenseits beider Patronen-Dichtflächen (8) seitlich geöffnet ist und daß mit dem ersten Ventilkörper (9) ein zweiter Ventilkörper (11) verbunden ist, der mit einem zugehörigen, vorzugsweise der anderen Patronen-Dichtfläche (8) zugeordneten Ventilsitz (12) zusammenarbeitet.

9. Gasarmatur nach einem der Ansprüche 1 bis 8, **dadurch gekennzeichnet, daß** das Gehäuse (1) zwei Einstecköffnungen (4) mit zugehörigen Patronen (5) aufweist, die in Reihe im Gasweg angeordnet sind.
